**Europäisches Patentamt**

**European Patent Office**

**Office européen des brevets**

(19)

(11) Veröffentlichungsnummer : **0 170 978**
**B1**

(12) **EUROPÄISCHE PATENTSCHRIFT**

(45) Veröffentlichungstag der Patentschrift :
27.07.88

(51) Int. Cl.⁴ : **C 03 C 11/00**

(21) Anmeldenummer : **85109255.1**

(22) Anmeldetag : **24.07.85**

(54) **Verfahren zum Herstellen von Schaumglas-Formkörpern.**

(30) Priorität : **31.07.84 DE 3428165**

(43) Veröffentlichungstag der Anmeldung :
**12.02.86 Patentblatt 86/07**

(45) Bekanntmachung des Hinweises auf die Patenterteilung : **27.07.88 Patentblatt 88/30**

(84) Benannte Vertragsstaaten :
**AT BE CH DE FR GB IT LI LU NL SE**

(56) Entgegenhaltungen :
**EP-A- 0 052 693**
**WO-A-82 /027 07**
**Die Akte enthält technische Angaben, die nach dem Eingang der Anmeldung eingereicht wurden und die nicht in dieser Patentschrift enthalten sind.**

(73) Patentinhaber : **Dennert, Heinz**
**Trosdorfer Weg 6**
**D-8609 Bischberg (DE)**

**Dennert, Hans Veit**
**Schloss Breitenlohe**
**D-8602 Burghaslach (DE)**

(72) Erfinder : **Die Erfinder haben auf ihre Nennung verzichtet**

(74) Vertreter : **Tergau, Enno et al**
**Patentanwälte Tergau & Pohl Postfach 11 93 47**
**Hefnersplatz 3**
**D-8500 Nürnberg 11 (DE)**

EP 0 170 978 B1

**Beschreibung**

Die Erfindung betrifft ein Verfahren zum Herstellen von Schaumglas-Formkörpern, bei welchem eine Mischung aus

a) feingemahlenem Glas mit wenigstens 25 Gew.% Alkalioxid und
b) feingemahlenem Glas mit weniger als 16 Gew.% Alkalioxid

mit Wasser sowie Zusätzen an Verschäumungsmitteln und gegebenenfalls Füllstoffen bei erhöhter Temperatur verschäumt wird. Ein derartiges Verfahren ist beispielsweise aus der europäischen Patentschrift 52 693 bekannt.

Als Glas mit mehr als 25 Gew.% Alkalioxid kommt Stückenglas oder ein anderes Sonderglas, das meist besonders erschmolzen werden muß, in Betracht. Als Glas mit weniger als 16 Gew.% Alkalioxid kann beliebiges Abfallglas, z. B. Flaschenglas oder Fensterglas eingesetzt werden.

Als Verschäumungsmittel werden der Mischung organische, kohlenstoff-liefernde Stoffe zusammen mit sauerstoffabgebenden Stoffen zugesetzt. Als organische Stoffe können beispielsweise Zucker, Melasse o.dgl. verwendet werden ; als sauerstoffabgebendes Mittel kommt Pyrolusit in Betracht. Die Treibmittel können bereits den Ausgangsstoffen oder auch der daraus entstehenden Schlempe zugesetzt werden.

Als Füllstoffe kommen vorzugsweise Calciumkarbonat in Form von Marmor, Kreide o.dgl. oder auch Bariumkarbonat, Dolomit oder vergleichbare Stoffe in Betracht.

Beim vorbekannten Verfahren werden gemahlene Glassorten eingesetzt, die beide eine Korngröße von 95 Gew.% unter 0,1 mm aufweisen. Die Glassorten werden im Gewichtsverhältnis a : b = 1 : 1,5 bis 1 : 20 eingesetzt, wobei Wasser mit Temperaturen von 50 bis vorzugsweise 95 °C verwendet wird. Das Verhältnis Wasser : Gesamtfeststoff soll 1 : 1,4 bis 1 : 2,5 betragen. Die aus Wasser und den genannten Feststoffen erzeugte Masse wird in einem Rührbehälter kurze Zeit gerührt. Dabei tritt häufig ein beträchtliches Ansteifen ein, welches durch Zusatz von Füllstoffen noch verstärkt werden kann. Die entstehende Masse wird, falls dies nicht schon gleich zu Anfang geschehen ist, mit einem geeigneten Treibmittelgemisch versetzt und dann je nach der Form des gewünschten Endproduktes granuliert oder auch in Formen gegossen. Die Granalien oder Gußstücke (beispielsweise Platten) werden alsdann bei erhöhter Temperatur verschäumt.

Das vorbekannte Verfahren hat sich in technischer Hinsicht bewährt. Die erzeugten Schaumglas-Formkörper haben ein geringes Raumgewicht von $0{,}1 \cdot 10^3$ bis $1{,}1 \cdot 10^3$ kg/m$^3$ und eine gute Festigkeit. Als Formkörper werden hier sowohl Platten oder andere Gußkörper als auch Granalien bezeichnet.

Schaumglas-Formkörper der hier beschriebenen Art werden meist als Bauhilfsstoffe verwendet und müssen möglichst billig sein. Wie bekannt, hängt der Preis derartiger Produkte vom Wert der eingesetzten Rohstoffe ab, im vorliegenden Fall also insbesondere von der Menge des benötigten Sonderglases mit mehr als 25 Gew.% Alkalioxid.

Der Erfindung liegt die Aufgabe zugrunde, das vorbekannte Verfahren wirtschaftlicher zu gestalten, ohne eine Qualitätsminderung des Verfahrensproduktes hinnehmen zu müssen.

Zur Lösung dieser Aufgabe wird von dem erwähnten vorbekannten Verfahren zum Herstellen von Schaumglas-Formkörpern ausgegangen, bei welchem eine Mischung aus (a) feingemahlenem Glas mit wenigstens 25 Gew.% Alkalioxid und (b) feingemahlenem Glas mit weniger als 16 Gew.% Alkalioxid mit Wasser sowie Zusätzen an Verschäumungsmitteln und gegebenenfalls Füllstoffen bei erhöhter Temperatur verschäumt wird. Das Neue besteht darin, daß die beiden Glassorten nunmehr zueinander in einem Gewichtsverhältnis von a :b = 1 :21 ... 1 :400 stehen.

Das Verfahren läßt sich in besonders leichter Weise durchführen, wenn die Glassorte (a) einen Alkalioxidgehalt von wenigstens 30 Gew.% aufweist. Des weiteren wird vorgeschlagen, daß die Glassorte (a) eine Korngröße von 95 Gew.% unter 250 μm aufweist und daß, unabhängig davon, die Glassorte (b) eine Korngröße von wenigstens 50 Gew.% unter 32 μm, Rest unter 90 μm hat.

Die erwähnten Verhältnisse beruhen auf der Erkenntnis, daß Gläser mit hohem Alkalioxid-Gehalt um so leichter in Lösung gehen, je höher der Alkalioxid-Gehalt ist. Mit Rücksicht darauf werden erfindungsgemäß gröber gemahlene Gläser eingesetzt, um dem Lösungsprozeß über die Gesamt-Dauer der Behandlung zu strecken.

Bei zahlreichen, zur Entwicklung des hier vorgeschlagenen Verfahrens durchgeführten Versuchen hat es sich gezeigt, daß besonders vorteilhafte Ergebnisse erzielt werden, wenn die beiden Ausgangsglassorten (a :b) mit Wasser angemischt werden, dessen pH-Wert zwischen 8 und 13,8, vorzugsweise zwischen 9 und 12 liegt. Um das Wasser auf diesen pH-Bereich einzustellen, sind lediglich geringe Konzentrationen an geeigneten Hydroxiden, vorzugsweise Ätznatron, erforderlich, die das Verfahren in ökonomischer Hinsicht nicht belasten und die auf den Alkaligehalt des Endproduktes keinen merklichen Einfluß haben. Innerhalb des angegebenen pH-Bereiches von 8 bis 13,8 hat sich ein engerer Bereich von 9 bis 12 besonders bewährt.

Ebenso wie beim vorbekannten Verfahren wird auch weiterhin ein Verhältnis Wasser : Gesamtfeststoff angewandt, welches in der Größenordnung 1 :1,4 bis 1 :2,5 liegt. Vorteilhafterweise kann das Verhältnis bis 1 :3,0 ausgedehnt werden.

Im Rahmen der Erfindung werden vorzugsweise die folgenden Konzentrationen an Schäumungsmit-

teln angewandt :

| Zucker | 0,1-1,0 Gew.% |
| Melasse | 0,4-5,0 Gew.% |
| Pyrolusit | 0,1-1,0 Gew.% |

wobei die Pyrolusit-Konzentration so eingestellt wird, daß sie wenigstens der sonst vorgesehenen Zuckermenge oder der 4-fachen sonst vorgesehenen Melasse-Menge entspricht.

Die Erfindung wird im folgenden anhand einiger Ausführungsbeispiele näher erläutert. Die Ausführungsbeispiele wurden nach folgender allgemeiner Arbeitsvorschrift ausgeführt :

Sonderglas (a) : 0,24-4,757 kg
Abfallglas (b) : 95,4-91,4 kg
Melasse : 1,00 kg
Pyrolusit : 0,25 kg
Kalziumkarbonat oder Dolomit : 3,0 kg
NaOH : 0,13 kg

Bei den nachfolgenden Ausführungsbeispielen wird auf die beigefügte Tabelle verwiesen. Die dort angegebene Menge des Sonderglases (a) sowie des Abfallglases (b) wurden jeweils für sich fein zermahlen und sodann miteinander vermischt. Die Mahlung wurde so geführt, daß sie beim Sonderglas (a) zu einer Korngröße von 95 Gew.% unter 250 μm führte. Bei der Glassorte (b), bei der es sich um gewöhnliches Flaschenglas handelte, wurde eine Korngröße von wenigsten 50 Gew.% unter 32 μm, Rest unter 90 μm angestrebt.

Das Sonderglas (a) hatte folgende Zusammensetzung :

68 Gew.% $SiO_2$
27 Gew.% $Na_2O$ und
5 Gew.% sonstige Metalloxide.

Das erhaltene Glasmehlgemisch wurde in einem Rührbehälter zusammen mit der angegebenen Menge Zucker, Melasse, Pyrolusit, und Kalziumkarbonat oder Dolomit vermischt. Das eingesetzte Pyrolusit enthielt 70 Gew.% $MnO_2$. Bei den durchgeführten Versuchen wurde Wasser von 90 °C eingesetzt und es wurde insgesamt 10 Minuten gerührt. Anstelle des warmen Wassers kann aber auch kaltes Wasser genommen werden, wenn die Rührzeit wesentlich verlängert werden kann.

In einem Teil der Fälle wurde noch die in der Tabelle angegebene Karbonatmenge in Form von Kalziumkarbonat zugesetzt. Des weiteren war in einem Teil der Fälle (siehe ebenfalls Tabelle) das eingesetzte Wasser durch Zugabe von NaOH schwach alkalisch gemacht worden.

Die resultierende Mischung wurde sodann mit etwa 500 kg fein gemahlenem Unter- und Überkorn aus früheren Ansätzen gleicher Zusammensetzung vermischt und die Gesamtmasse in einem handelsüblichen Granulator granuliert. Es entstanden Granulatkörner von der Größenordnung 0,5-2,0 mm.

Nach Entleeren des Granulators wurde das entstandene Granulat in einer Trockentrommel auf 300 °C erwärmt und dabei getrocknet. Das aus der Trockentrommel auslaufende Granulat wurde in einer Siebmaschine in Unter-, Über- und Brauchkorn getrennt.

Das Unter- und das in einem Brecher zerkleinerte Überkorn wurde in ein Vorratssilo zurückgeführt und bei der Granulierung eines neuen Ansatzes wieder verwendet. Das erhaltene Brauchkorn wurde mit 20 Gew.% Tonmehl gemischt und in einem Verschäumungsrohr bei 780 °C auf das 5fache Volumen gebläht. Nach Abtrennung überschüssigen Trennmittels lag ein Granulat vor, welches bei einer Korngröße von 4-6 mm ein Schüttgewicht von 185 kg/m³ aufwies.

Nach der vorstehenden allgemeinen Arbeitsanweisung wurden insgesamt 19 Ausführungsbeispiele ausgeführt. Einzelheiten sowie die erhaltenen Korndichten gehen aus der nachfolgenden Tabelle hervor.

(Siehe Tabelle Seite 4 f.)

## Tabelle

Beispiele:
alle Werte in kg

| Nr. | Sondergl. a | Abfallgl. b | a:b | Zucker | Melasse | Pyrolusit | Carbonat | NaOH | Gesamt-alkali | Korndicke $g/cm^3$ |
|---|---|---|---|---|---|---|---|---|---|---|
| 1 [x)] | 4.975 | 94.52 | 1:19 | 0.25 | – | 0.25 | – | – | 12.9 | 0.19 |
| 2 | 3.980 | 95.52 | 1:24 | 0.25 | – | 0.25 | – | – | 12.72 | 0,20 |
| 3 | 2.985 | 96.51 | 1:32.3 | 0.25 | – | 0.25 | – | – | 12.54 | 0,21 |
| 4 | 1.990 | 97.51 | 1:49 | 0.25 | – | 0.25 | – | – | 12.36 | 0.22 |
| 5 | 0.995 | 98.50 | 1:99 | 0.25 | – | 0.25 | – | – | 12.18 | 0.23 |
| 6 [x)] | 4.796 | 91.12 | 1:19 | – | 1.0 | 0.25 | 3.0 | – | 12.9 | 0.18 |
| 7 | 2.877 | 93.04 | 1:32.3 | – | 1.0 | 0.25 | 3.0 | – | 12.54 | 0.19 |
| 8 | 0.959 | 94.96 | 1:99 | – | 1.0 | 0.25 | 3.0 | – | 12.18 | 0.205 |
| 9 [x)] | 4.784 | 90.90 | 1:19 | – | 1.0 | 0.25 | 3.0 | 0.25 | 13.15 | 0.17 |
| 10 | 2.870 | 92.82 | 1:32.3 | – | 1.0 | 0.25 | 3.0 | 0.25 | 12.79 | 0.18 |
| 11 | 0.956 | 94.73 | 1:99 | – | 1.0 | 0.25 | 3.0 | 0.25 | 12.43 | 0.21 |
| 12 [x)] | 4.790 | 91.01 | 1:19 | – | 1.0 | 0.25 | 3.0 | 0.13 | 13.03 | 0.17 |
| 13 | 2.874 | 92.92 | 1:32.3 | – | 1.0 | 0.25 | 3.0 | 0.13 | 12.67 | 0.175 |
| 14 | 0.958 | 94.84 | 1:99 | – | 1.0 | 0.25 | 3.0 | 0.13 | 12.31 | 0.21 |
| | | | | | | | $MgCO_3, CaCO_3$ | | | |
| 15 [x)] | 4.790 | 91.01 | 1:19 | – | 1.0 | 0.25 | 3.0 | 0.13 | 13.03 | 0.165 |
| 16 | 2.874 | 92.92 | 1:32.3 | – | 1.0 | 0.25 | 3.0 | 0.13 | 12.67 | 0.173 |
| 17 | 0.958 | 94.84 | 1:99 | – | 1.0 | 0.25 | 3.0 | 0.13 | 12.31 | 0.200 |
| 18 | 0.5 | 95.13 | 1:190 | – | 1.0 | 0.25 | 3.0 | 0.13 | 11.71 | 0.22 |
| 19 | 0.25 | 95.38 | 1:381.5 | – | 1.0 | 0.25 | 3.0 | 0.13 | 11.66 | 0.26 |

[x)] = Vergleichsversuche

**Patentansprüche**

1. Verfahren zum Herstellen von Schaumglas-Formkörpern, bei welchem eine Mischung aus
   a) feingemahlenem Glas mit wenigstens 25 Gew.% Alkalioxid und
   b) feingemahlenem Glas mit weniger als 16 Gew.% Alkalioxid
mit Wasser sowie Zusätzen an Verschäumungsmitteln und gegebenenfalls Füllstoffen bei erhöhter Temperatur verschäumt wird, dadurch gekennzeichnet, daß die beiden Glassorten zueinander in einem Gewichtsverhältnis von a :b = 1 :21 bis 1 :400 stehen.

2. Verfahren nach Anspruch 1, dadurch gekennzeichnet, daß die Glassorte (a) einen Alkalioxid-Gehalt von wenigstens 30 Gew.% aufweist.

3. Verfahren nach Anspruch 1 und 2, dadurch gekennzeichnet, daß die Glassorte (a) eine Korngröße von 95 Gew.% unter 250 μm aufweist.

4. Verfahren nach einem der Ansprüche 1-3, dadurch gekennzeichnet, daß die Glassorte (b) eine Korngröße von wenigstens 50 Gew.% unter 32 μm, Rest unter 90 μm aufweist.

5. Verfahren nach einem der Ansprüche 1-4, dadurch gekennzeichnet, daß die Feststoffe mit Wasser von pH 8 bis 13,8 angemischt werden.

6. Verfahren nach Anspruch 5, dadurch gekennzeichnet, daß Wasser mit einem pH-Wert von 9 bis 12 eingesetzt wird.

7. Verfahren nach einem der vorausgehenden Ansprüche, dadurch gekennzeichnet, daß das Verhältnis Wasser :Gesamt-Feststoff wie 1 :1,4 bis 1 :3,0 eingestellt wird.

**Claims**

1. A process for producing moulded foam glass bodies wherein a mixture of
   a) finely ground glass with an alkali oxide content of at least 25 % by weight and
   b) finely ground glass with an alkali oxide content of less than 16 % by weight
is foamed at an increased temperature with water as well as additives of foaming agents and fillers if required, characterised in that the two glass varieties have a weight ratio of a :b = 1 :21 to 1 :400.

2. A process according to claim 1, characterised in that the glass variety (a) has an alkali oxide content of at least 30 % by weight.

3. A process according to claims 1 and 2, characterised in that the glass variety (a) has for 95 % by weight, a grain size of less than 250 μm.

4. A process according to one of claims 1-3, characterised in that the glass variety (b) has for at least 50 % by weight, a grain size of less than 32 μm, the remainder less than 90 μm.

5. A process according to one of claims 1-4, characterised in that the solids are mixed with water with a pH value of 8 to 13.8.

6. A process according to claim 5, characterised in that water with a pH value of 9 to 12 is used.

7. A process according to one of the preceding claims, characterised in that the water : total solids ratio is set as 1 : 1.4 up to 1 : 3.0.

**Revendications**

1. Procédé pour la fabrication de corps moulés en verre mousse, dans lequel on fait mousser à température élevée un mélange de
   (a) un verre finement moulu à au moins 25 % en poids d'oxyde alcalin et
   (b) un verre finement moulu à moins de 16 % en poids d'oxyde alcalin
avec de l'eau et des additions d'agents moussants et éventuellement des charges, caractérisé en ce que les deux sortes de verre sont l'une par rapport à l'autre dans un rapport pondéral a : b de 1 : 21 à 1 : 400.

2. Procédé selon la revendication 1, caractérisé en ce que la sorte de verre (a) présente une teneur en oxyde alcalin d'au moins 30 % en poids.

3. Procédé selon les revendications 1 et 2, caractérisé en ce que la sorte de verre (a) présente une granulométrie de 95 % en poids de moins de 250 μm.

4. Procédé selon l'une des revendications 1 à 3, caractérisé en ce que la sorte de verre (b) présente une granulométrie d'au moins 50 % en poids de moins de 32 μm, le reste de moins de 90 μm.

5. Procédé selon l'une des revendications 1 à 4, caractérisé en ce que les matières solides sont mélangées avec de l'eau à un pH de 8 à 13,8.

6. Procédé selon la revendication 5, caractérisé en ce que l'on utilise de l'eau ayant un pH de 9 à 12.

7. Procédé selon l'une des revendications précédentes, caractérisé en ce que le rapport eau : solides totaux est réglé entre 1 : 1,4 et 1 : 3,0.